# FASCICULE DE BREVET EUROPEEN

(11) **EP 2 886 907 B1**
(45) Date de publication et mention de la délivrance du brevet: **11.09.2019**
(21) Numéro de dépôt: 14194137.7
(22) Date de dépôt: 20.11.2014
(51) Int. Cl.: F16F 15/139

(54) **Ensemble secondaire d'un double volant amortisseur, notamment pour un véhicule automobile**
Sekundärer Satz eines Zweimassenschwungrad, insbesondere für ein Kraftfahrzeug
A secondary set of a dual mass flywheel, especially for a motor vehicle.

(30) Priorité: 20.12.2013 FR 1363285
(43) Date de publication de la demande: 24.06.2015
(73) Titulaire: Valeo Embrayages, 80009 Amiens Cedex 2 (FR)
(72) Inventeur: Lanfranco, Gianbattista, 10046 POIRINO (TO) (IT)
(74) Mandataire: Cardon, Nicolas

(56) Documents cités:
- FR-A1- 2 784 429

## Description

La présente invention concerne un ensemble secondaire d'un double volant amortisseur, notamment pour un véhicule automobile.

Dans un véhicule automobile, un double volant amortisseur est un dispositif de transmission de couple généralement positionné entre l'extrémité d'un vilebrequin d'un moteur à combustion interne et un arbre d'entrée d'une boîte de vitesses.

Un double volant amortisseur comporte généralement un ensemble primaire comportant un volant primaire, destiné à être fixé à l'extrémité du vilebrequin, et un ensemble secondaire comportant un volant secondaire destiné à être couplé à un arbre d'entrée d'une boîte de vitesses. L'ensemble primaire est monté mobile en rotation autour de l'ensemble secondaire au moyen d'un roulement, le débattement angulaire de l'ensemble primaire par rapport à l'ensemble secondaire étant limité par l'action d'organes élastiques, montés entre lesdits volants, typiquement des ressorts hélicoïdaux.

Afin d'éviter qu'en sortie de vilebrequin, des couples moteur trop élevés ne soient transmis dans la boîte de vitesses, ce qui pourrait s'avérer dommageable pour les organes de transmission du véhicule, un limiteur de couple est généralement interposé entre le volant primaire et le volant secondaire.

Classiquement, tant que le couple différentiel, correspondant à la différence entre le couple appliqué sur le volant primaire et le couple appliqué sur le volant secondaire, est inférieur à un couple seuil d'activation (typiquement de l'ordre de 400 N.m dans le cas d'un moteur de voiture et de l'ordre de 4000 N.m dans le cas d'un moteur de poids lourd), le limiteur de couple est inactif. Dès que le couple différentiel devient supérieur au couple seuil d'activation du limiteur de couple, le limiteur de couple devient actif. Le volant primaire est alors entraîné librement en rotation par rapport au volant secondaire. Lorsque le couple moteur est à nouveau inférieur au couple seuil d'activation, le limiteur de couple redevient inactif.

Un tel couple seuil d'activation peut notamment être atteint en cas d'arrêt moteur, de démarrage avorté ou de calage du moteur. Dans de tels cas, le couple différentiel peut atteindre 1000 N.m à 4000 N.m dans le cas d'un moteur de voiture.

Classiquement, pour monter le double volant amortisseur sur le vilebrequin, des organes de fixation, généralement des vis, traversent des alésages primaires du volant primaire et sont fixés, généralement vissés, dans le vilebrequin. L'ensemble secondaire vient cependant classiquement recouvrir l'ensemble primaire, du côté opposé au vilebrequin, ce qui peut rendre difficile la mise en place des organes de fixation. Les doubles volants amortisseurs à limiteur de couple de l'art antérieur sont donc livrés avec un positionnement relatif des ensembles primaire et secondaire facilitant le montage. Plus précisément, l'ensemble secondaire présente des fenêtres qui sont superposées aux alésages primaires, de façon à permettre le passage des organes de fixation à travers lesdites fenêtres et lesdits alésages primaires pour fixer le volant primaire sur le vilebrequin.

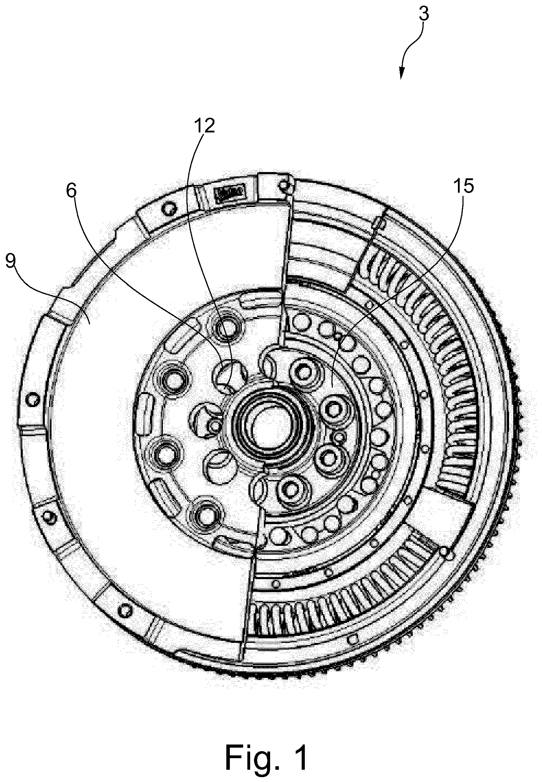

Cependant, suite à l'activation du limiteur du couple, lorsqu'observée selon une direction sensiblement parallèle à l'axe du vilebrequin, la position angulaire relative de l'ensemble primaire par rapport à l'ensemble secondaire est modifiée, comme cela peut être observé sur la figure 1, qui représente en agrandissement une partie d'un double volant amortisseur 3 de l'art antérieur après activation du limiteur de couple.

Comme cela est observé sur la figure 1, la fenêtre 6 de l'ensemble secondaire 9 est décalé par rapport à l'alésage primaire 12 de l'ensemble primaire 15, si bien qu'il n'est plus possible d'accéder à et/ou de dévisser la vis de fixation, et encore moins d'extraire ladite vis à travers la fenêtre de l'ensemble secondaire. Par ailleurs, lors d'un démontage du double volant amortisseur, par exemple suite à une panne, le repositionnement de l'ensemble secondaire sur l'ensemble primaire, pour que lesdits alésages primaires et lesdites fenêtres se superposent, est en pratique difficile à réaliser pour l'ouvrier chargé de la réparation, sans outil de démontage adapté. En effet, un tel repositionnement ne peut être obtenu qu'en activant à nouveau le limiteur de couple pour permettre un glissement de l'ensemble secondaire sur l'ensemble primaire. Cependant, même avec une clé de démontage, il est très difficile, voire impossible pour l'ouvrier d'atteindre le couple seuil d'activation du limiteur. 1 FR 2 784 429 A1 décrit un double volant amortisseur comportant un volant secondaire comprenant un limiteur de couple intervenant entre la périphérie externe d'un moyeu et la périphérie interne d'un plateau de réaction sur lequel est rapporté un anneau interne de matière différente.

DE 41 40 822 décrit un double volant amortisseur à limiteur de couple permettant de s'affranchir de cet inconvénient. Comme cela peut être observé sur la figure 1 de ce document, dans le dispositif de DE 41 40 822, les organes de fixation de l'ensemble primaire sur le vilebrequin sont positionnés radialement à l'intérieur du roulement qui guide la rotation de l'ensemble secondaire sur l'ensemble primaire. Ainsi, quelle que soit la position relative de l'ensemble secondaire par rapport à l'ensemble primaire, il est possible d'extraire les vis de fixation. Dans DE 41 40 822, il est cependant nécessaire de disposer d'un roulement présentant un diamètre supérieur à celui d'un roulement d'un double volant amortisseur conventionnel, dans lequel les vis de fixation sont situées radialement à l'extérieur par rapport au roulement. Cependant, un tel roulement est complexe et coûteux à fabriquer, le coût de fabrication d'un roulement augmentant avec son diamètre.

Il existe donc un besoin pour un double volant amortisseur avec limiteur de couple qui permette un démontage simplifié suite à l'activation du limiteur de couple, et qui soit plus simple et moins coûteux à fabriquer que le double volant amortisseur décrit dans DE 41 40 822.

La présente invention cherche à résoudre ce problème, au moins partiellement, et elle y parvient en proposant un ensemble secondaire destiné à un double volant amortisseur à limiteur de couple, ledit ensemble secondaire comportant :
- un moyeu secondaire d'axe X
   ∘ comportant une première portée de moyeu secondaire, de préférence cylindrique de révolution autour de l'axe X, apte à recevoir une bague extérieure d'un roulement d'axe X, ou
   ∘ conformé pour définir un chemin de roulement extérieur d'axe X, respectivement,
   ledit moyeu secondaire étant traversé sensiblement axialement par au moins une fenêtre positionnée radialement à l'extérieur de ladite portée ou dudit chemin de roulement extérieur respectivement,
- un volant secondaire monté à rotation autour de l'axe X sur le moyeu secondaire, et
- un limiteur de couple comportant
   ∘ un premier organe d'accouplement rigidement solidaire du volant secondaire, et
   ∘ un deuxième organe d'accouplement accouplé au premier organe d'accouplement,
lesdits premier et deuxième organes d'accouplement n'étant découplés que sous l'effet d'un couple différentiel supérieur à un couple seuil d'activation,
le moyeu secondaire étant mobile en rotation par rapport au volant secondaire sous l'action d'un couple de repositionnement inférieur au couple seuil d'activation du limiteur de couple,
le volant secondaire étant traversé sensiblement axialement par un trou conformé pour laisser un accès direct à ladite au moins une fenêtre.

Dans un double volant amortisseur comportant un ensemble secondaire selon l'invention, ladite fenêtre est disposée de manière à pouvoir être mise en regard avec un alésage primaire (et donc avec un organe de fixation de l'ensemble primaire sur le vilebrequin) par simple rotation du moyeu secondaire par rapport au volant secondaire, quelle que soit la position relative de l'ensemble secondaire par rapport à l'ensemble primaire.

Avantageusement, après activation du limiteur de couple, il est ainsi possible de déplacer en rotation le moyeu secondaire par rapport au volant secondaire en appliquant un couple de repositionnement inférieur au couple seuil d'activation du limiteur de couple de manière à accéder audit organe de fixation, notamment pour le démonter et l'extraire au travers de ladite fenêtre et dudit trou.

Par ailleurs, un ensemble secondaire selon l'invention permet de s'affranchir, lors de la fabrication du double volant amortisseur, d'une étape pour assurer la superposition d'une fenêtre de l'ensemble secondaire sur un alésage primaire de l'ensemble primaire, comme c'est le cas pour un double volant amortisseur conventionnel. Une simple rotation du moyeu secondaire peut en effet être effectuée lors du montage du double volant amortisseur sur un vilebrequin, par exemple sur une chaîne de montage de véhicule automobile. L'ouvrier chargé du montage peut ainsi, au besoin, aisément repositionner une fenêtre du moyeu secondaire par rapport à l'ensemble primaire, pour insérer un organe de fixation à travers le trou, la fenêtre et l'alésage primaire, et fixer ainsi l'ensemble primaire sur le vilebrequin. Le coût de fabrication du double volant amortisseur est ainsi réduit.

Enfin, un double volant amortisseur comportant un ensemble secondaire selon la présente invention peut comporter un roulement présentant un faible diamètre, comme les roulements classiquement utilisés dans un double volant amortisseur de l'art antérieur.

Un ensemble secondaire selon la présente invention peut encore comporter une ou plusieurs des caractéristiques optionnelles suivantes :
- le moyeu secondaire est mobile en rotation par rapport au volant secondaire sous l'action d'un couple de repositionnement inférieur à 300 N.m, inférieur à 200 N.m, inférieur à 100 N.m, inférieur à 50 N.m, inférieur à 10 N.m, de préférence applicable à l'aide de la main seule ;
- le moyeu secondaire est mobile en rotation par rapport au volant secondaire sous l'action d'un couple de repositionnement inférieur à 0,9 fois, inférieur à 0,8 fois, inférieur à 0,7 fois, inférieur à 0,6 fois, inférieur à 0,5 fois, inférieur à 0,4 fois, inférieur à 0,3 fois, inférieur à 0,2 fois, inférieur à 0,1 fois le couple seuil d'activation du limiteur de couple ;
- le moyeu secondaire est monté frottant sur le volant secondaire ; un couple de frottement évite tout mouvement relatif entre le moyeu secondaire et le volant secondaire ;
- le moyeu secondaire n'est mobile en rotation par rapport au volant secondaire que sous l'action d'un couple de repositionnement supérieur à un couple seuil de repositionnement ;
- le couple seuil de repositionnement est supérieur à 2 N.m, supérieur à 10 N.m, supérieur à 100 N.m ; une usure prématurée des surfaces de contact entre le moyeu secondaire et le volant secondaire est ainsi évitée ;
- le couple seuil de repositionnement est déterminé de façon à éviter la mise en rotation du moyeu secondaire par rapport au volant secondaire lors de l'utilisation normale d'un véhicule automobile comportant un double volant amortisseur comportant un ensemble secondaire selon l'invention ;
- le couple seuil de repositionnement est déterminé en fonction de l'inertie du moyeu secondaire et du niveau d'accélération mesuré au niveau du moyeu secondaire ;
- la première portée de moyeu secondaire est radialement extérieure à la bague extérieure du roulement ;
- le moyeu secondaire comporte au moins deux fenêtres, voire au moins trois fenêtres, voire au moins quatre fenêtres, de préférence au moins huit fenêtres ;
- une fenêtre présente une forme cylindrique d'axe parallèle à l'axe X ;
- la section transversale d'une fenêtre, dans un plan axial médian, présente une forme ovale, ou polygonale, notamment hexagonale ou carrée, ou de préférence circulaire ;
- la fenêtre présente, dans un plan médian axial, une surface supérieure à 1 cm², de manière qu'au moins un doigt d'une main humaine puisse y être insérée ;
- les fenêtres sont équi-angulairement réparties autour de l'axe X ;
- le moyeu secondaire comporte une deuxième portée de moyeu secondaire, de préférence cylindrique de révolution, au contact du volant secondaire et située radialement à l'extérieur de la première portée de moyeu secondaire;
- la fenêtre est positionnée radialement à l'intérieur de la deuxième portée de moyeu secondaire ;
- le moyeu secondaire comporte un évidement central, de préférence cylindrique de révolution d'axe X ;
- le moyeu secondaire comporte une première portion d'appui de moyeu secondaire agencée pour être en butée axiale contre le volant secondaire ;
- l'ensemble secondaire comporte une bague extérieure de roulement et le moyeu secondaire comporte une deuxième portion d'appui de moyeu secondaire en butée axiale contre la bague extérieure du roulement ;
- le premier organe d'accouplement du limiteur de couple est fixé sur le volant secondaire à l'aide d'au moins un rivet ;
- le deuxième organe d'accouplement du limiteur de couple est monté frottant sur le premier organe d'accouplement du limiteur de couple;
- le deuxième organe d'accouplement du limiteur de couple est accouplé à un volant primaire d'un double volant amortisseur de sorte que pour un couple différentiel supérieur au couple seuil d'activation du limiteur de couple, le volant primaire n'entraîne plus en rotation le volant secondaire ;
- le couple seuil d'activation est supérieur ou égal à 400 N.m, supérieur ou égal à 1000 N.m, supérieur ou égal à 4000 N.m ;
- l'ensemble secondaire comporte une rondelle élastique d'axe X et le moyeu secondaire comporte une troisième portion d'appui de moyeu secondaire en contact axial avec la rondelle élastique ;
- la rondelle élastique est disposée, de préférence est prise en sandwich, entre le limiteur de couple et le moyeu secondaire, en particulier entre le premier organe d'accouplement et le moyeu secondaire ;
- la rondelle élastique est comprimée axialement, de manière à plaquer le moyeu secondaire contre le volant secondaire ;
- la rondelle élastique présente une élasticité axiale, et de préférence est du type ondulée ou du type Belleville ;
- le moyeu secondaire est en acier ;
- le moyeu secondaire est obtenu par usinage, moulage, emboutissage ou frittage ;
- le moyeu secondaire est en matière plastique résistant à une température supérieure à 200 °C, de préférence en un thermoplastique, en particulier en PEEK;
- le volant secondaire comporte une portée de volant secondaire s'étendant axialement, de préférence cylindrique de révolution sur laquelle s'appuie le moyeu secondaire ;
- le volant secondaire comporte un épaulement de volant secondaire, de préférence annulaire, définissant une butée axiale pour le moyeu secondaire ;
- le trou du volant secondaire est central ; de préférence, il présente la forme d'un cylindre de révolution d'axe X ;
- l'accès direct se fait selon une direction axiale ;
- le roulement est choisi parmi un roulement à bille, ou un roulement à aiguille ou un palier lisse.

L'invention concerne aussi un double volant amortisseur à limiteur de couple d'axe X, comportant :
- un ensemble primaire comportant un volant primaire et un alésage primaire apte à être traversé par un organe de fixation de l'ensemble primaire sur le vilebrequin d'un moteur,
- un ensemble secondaire selon l'invention,
- un ressort,
le ressort étant interposé entre le deuxième organe d'accouplement du limiteur de couple et le volant primaire,
ladite au moins une fenêtre du moyeu secondaire étant conformée pour offrir un accès direct à l'alésage primaire, dans au moins une position angulaire du moyeu secondaire.

Un double volant amortisseur selon la présente invention peut aussi comporter une ou plusieurs des caractéristiques additionnelles suivantes :
- le double volant amortisseur comporte un roulement dont la bague intérieure est fixée sur l'ensemble primaire et dont la bague extérieure est
   ∘ fixée, de préférence en force, sur la première portée de moyeu secondaire, ou
   ∘ constituée par ledit moyeu secondaire,
   l'alésage primaire de l'ensemble primaire étant disposé radialement à l'extérieur du roulement ;
- la bague intérieure du roulement est montée en force sur l'ensemble primaire, en particulier sur le moyeu primaire ;
- Le ressort est à action orthoradiale ;
- ladite au moins une fenêtre présente une forme cylindrique d'axe parallèle à l'axe X ; de préférence la fenêtre est un cylindre de révolution dont le diamètre est supérieur au diamètre de l'alésage primaire de l'ensemble primaire ;
- l'ensemble primaire comporte au moins deux alésages primaires, voire au moins trois alésages primaires, voire au moins quatre alésages primaires, de préférence au moins huit alésages primaires ;
- les alésages primaires sont équi-angulairement répartis autour de l'axe X ;
- le nombre d'alésages primaires est égal au nombre de fenêtres ;
- l'angle entre deux alésages primaires disposés successivement autour de l'axe X est égal à l'angle entre deux fenêtres disposées successivement autour de l'axe X, lesdits angles étant mesurés dans des plans axiaux ;
- dans au moins une position du moyeu secondaire, chaque alésage primaire est superposé, de préférence totalement, à une fenêtre qui lui fait face axialement ;
- dans au moins une position du moyeu secondaire, chaque fenêtre est superposée, de préférence totalement, à au moins un, de préférence à un unique alésage primaire qui lui fait face axialement ;
- le double volant amortisseur comporte deux ressorts, de préférence hélicoïdaux et à action orthoradiale ;
- le limiteur de couple est disposé axialement entre le volant secondaire et l'ensemble primaire ;

L'invention concerne aussi un procédé de montage ou de démontage d'un double volant amortisseur à limiteur de couple selon l'invention, ledit procédé comportant les étapes successives suivantes :
a) entraînement en rotation du moyeu secondaire par rapport au volant secondaire de façon à superposer une fenêtre du moyeu secondaire et un alésage primaire, et
b) montage ou démontage de l'organe de fixation à travers ladite fenêtre et ledit alésage primaire, et en particulier par vissage ou dévissage dans un orifice taraudé du vilebrequin.

L'invention a également pour objet un ensemble secondaire destiné à un double volant amortisseur à limiteur de couple, ledit ensemble secondaire comportant :
- un moyeu secondaire d'axe X
   ∘ comportant une première portée de moyeu secondaire, de préférence cylindrique de révolution autour de l'axe X, apte à recevoir une bague extérieure d'un roulement d'axe X, ou
   ∘ conformé pour définir un chemin de roulement extérieur d'axe X, respectivement,
   ledit moyeu secondaire étant traversé sensiblement axialement par au moins une fenêtre positionnée radialement à l'extérieur de ladite portée ou dudit chemin de roulement extérieur respectivement,
- un volant secondaire monté à rotation autour de l'axe X sur le moyeu secondaire, et
- un limiteur de couple comportant
   ∘ un premier organe d'accouplement rigidement solidaire du volant secondaire, et
   ∘ un deuxième organe d'accouplement accouplé au premier organe d'accouplement,
lesdits premier et deuxième organes d'accouplement n'étant découplés que sous l'effet d'un couple différentiel supérieur à un couple seuil d'activation, le moyeu secondaire étant mobile en rotation par rapport au volant secondaire sous l'action d'un couple de repositionnement inférieur au couple seuil d'activation du limiteur de couple,
le volant secondaire étant traversé sensiblement axialement par un trou conformé pour laisser un accès direct à ladite au moins une fenêtre,
lorsque le volant secondaire est assemblé avec le moyeu secondaire.

L'invention concerne une chaîne de transmission d'un véhicule automobile, comportant un double volant amortisseur selon l'invention.

L'invention concerne enfin un véhicule automobile, par exemple une voiture, un poids lourd, un tracteur agricole, un engin de chantier, ledit véhicule automobile comportant un double volant amortisseur selon l'invention, des organes de fixation et un vilebrequin d'un moteur, le double volant amortisseur étant fixé audit vilebrequin par l'intermédiaire des organes de fixation.

Par convention, une orientation « radiale » est dirigée orthogonalement à un axe et passe par cet axe. L'axe définit l'orientation « axiale ». Sauf indication contraire, l'axe est l'axe X de rotation du double volant amortisseur.

Par plan ou surface « axial », ou respectivement « radial », on entend un plan ou une surface dont un vecteur normal est colinéaire à un axe, respectivement à l'orientation radiale. Par plan ou coupe « longitudinal », on entend un plan ou une coupe contenant l'axe. Sauf indication contraire, cet axe est l'axe X de rotation.

Les termes « radialement intérieur » et « radialement extérieur » définissent des positions relatives par rapport à l'axe X. Un objet radialement intérieur est plus proche de l'axe X qu'un objet radialement extérieur.

Une « bague extérieure », une « bague intérieure » respectivement, d'un roulement correspond à la bague dudit roulement située radialement à l'extérieur, à l'intérieur respectivement, dudit roulement.

Le moyeu secondaire est conformé pour définir un chemin de roulement « extérieur » d'axe X lorsqu'il peut servir de bague extérieure à un roulement d'axe X.

Sauf indication contraire, une épaisseur correspond à la plus grande dimension mesurée selon l'axe X.

On considère qu'un trou offre un « accès direct » à une fenêtre lorsqu'il permet un accès « en ligne droite » à cette fenêtre.

Par "comportant un", ou "comprenant un", on entend "comportant au moins un", sauf indication contraire. Par "définissant un", on entend "définissant au moins un", sauf indication contraire. Par "présentant un", on entend "présentant au moins un", sauf indication contraire.

L'invention pourra être mieux comprise à la lecture de la description détaillée qui va suivre et à l'examen du dessin annexé, sur lequel :
- la figure 1 est une vue de face d'un double volant amortisseur à limiteur de couple de l'art antérieur, illustrant la position d'un ensemble secondaire par rapport à un ensemble primaire après activation du limiteur de couple,
- la figure 2 représente en vue axiale un double volant amortisseur selon un premier mode de réalisation de l'invention avec des écorchés des ensembles primaire et secondaire,
- la figure 3 représente le double volant amortisseur de la figure 2 en coupe selon une direction d'observation radiale,
- la figure 4 représente une vue éclatée du double volant amortisseur selon un premier mode de réalisation de l'invention,
- la figure 5 illustre un double volant amortisseur selon une variante de réalisation, en coupe selon une direction d'observation radiale, dans laquelle le moyeu secondaire définit une bague extérieure de roulement,
- la figure 6 représente un double volant amortisseur selon une autre variante de réalisation, en coupe selon une direction d'observation radiale, et
- la figure 7 illustre en vue tridimensionnelle le moyeu secondaire du double volant amortisseur de la figure 6.

Les exemples illustrés par le dessin sont les modes de réalisation préférés et sont fournis uniquement à titre illustratif. L'invention n'est donc pas limitée à ces modes de réalisation.

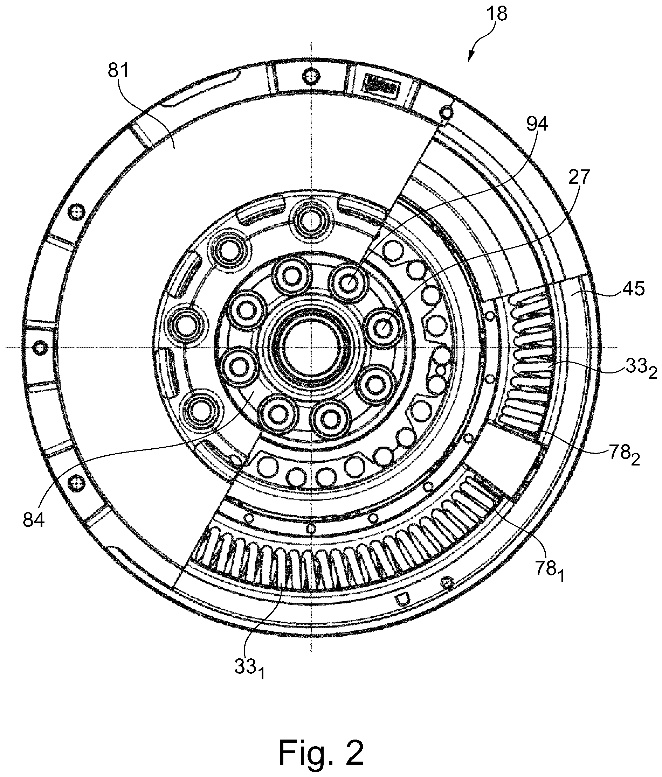

Le double volant amortisseur 18 selon un premier mode de réalisation est représenté sur les figures 2 à 4.

Il comporte un ensemble primaire 21, un ensemble secondaire 24, des organes de fixation 27₁ à 27₈, et un roulement 30. Il comporte encore des organes élastiques de rappel 33₁ et 33₂, sous la forme de ressorts, de préférence hélicoïdaux et à action orthoradiale, s'étendant autour d'un axe X.

De préférence, les pièces constituant l'ensemble primaire et/ou les organes de fixation et/ou le roulement et/ou les organes élastiques et/ou l'ensemble secondaire sont métalliques. De préférence, elles sont en acier ou en fonte.

L'ensemble primaire 21 comporte un moyeu primaire 36, comprenant une portion tubulaire 39 à partir de laquelle une portion radiale 42 s'étend radialement vers l'extérieur, et un volant primaire 45, de forme générale sensiblement annulaire et s'étendant radialement. Le moyeu primaire est fixé sur le vilebrequin d'un moteur, non représenté sur le dessin, à l'aide des organes de fixation 27, de préférence des vis de fixation. Le moyeu primaire et le vilebrequin prennent en sandwich le volant primaire. Le volant primaire est ainsi fixé sur le moyeu primaire. Par ailleurs, il comporte un relief annulaire 45 s'étendant axialement, dans lequel un épaulement annulaire 48, formé dans la portion tubulaire du moyeu primaire, est emmanché. L'épaulement annulaire et le relief annulaire définissent ainsi des butées radiale et axiale, assurant le centrage par rapport à l'axe X, du moyeu primaire sur le volant primaire.

Suivant un autre mode de réalisation, le moyeu primaire 36 est emmanché en force sur le volant primaire 45.

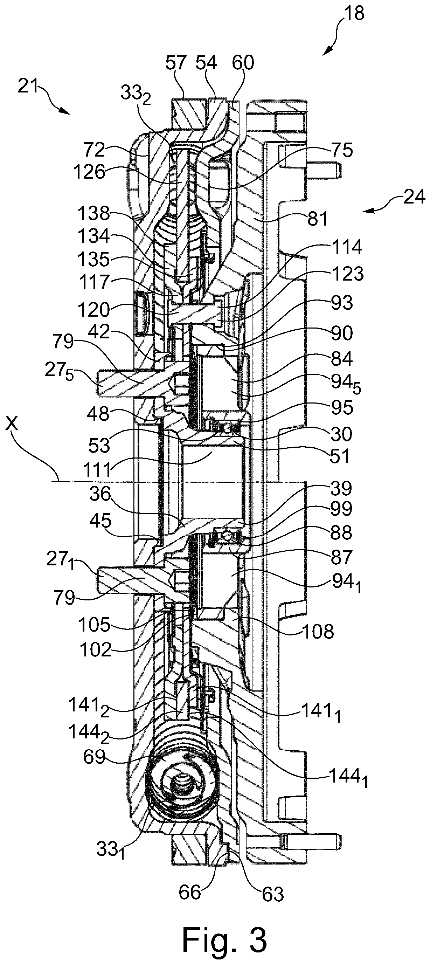

Par ailleurs, le moyeu primaire définit une portée tubulaire 51 sur laquelle est emmanchée, de préférence en force, la bague intérieure 53 du roulement. Dans un mode de réalisation, tel qu'illustré par exemple sur la figure 3, la portée tubulaire fait saillie axialement du volant primaire.

Le volant primaire présente, en périphérie extérieure, un rebord 54 cylindrique de révolution et s'étendant axialement, dont la face radialement extérieure présente une denture externe 57, destinée à engrener avec un pignon de démarreur, non représenté. Le volant primaire est en outre fixé à une tôle primaire annulaire 60, de diamètre extérieur sensiblement égal au diamètre extérieur du volant primaire. La fixation est réalisée de préférence par soudage. Une face radialement extérieure 63 de la tôle primaire est alors soudée à une face libre 66 du rebord du volant primaire.

Le volant primaire et la tôle annulaire définissent ainsi un berceau 69 présentant une forme de gorge annulaire, dans lequel sont logés les deux ressorts hélicoïdaux 33.

Le volant primaire et la tôle primaire comportent en outre chacune un relief 72, 75 s'étendant axialement, lesdits reliefs étant disposés en face à face de manière à réduire localement la largeur du berceau, formant ainsi un premier point d'appui 78₁, 78₂ pour une extrémité de chacun des deux ressorts.

L'ensemble primaire comporte en outre des alésages primaires 79 formés dans le volant primaire et le moyeu primaire, traversés par les organes de fixation 27.

L'ensemble secondaire comporte un volant secondaire 81 d'axe X, destiné à être couplé à l'arbre d'entrée de la boîte de vitesses, non représenté, et un moyeu secondaire 84 d'axe X.

Le moyeu secondaire présente une forme sensiblement annulaire.

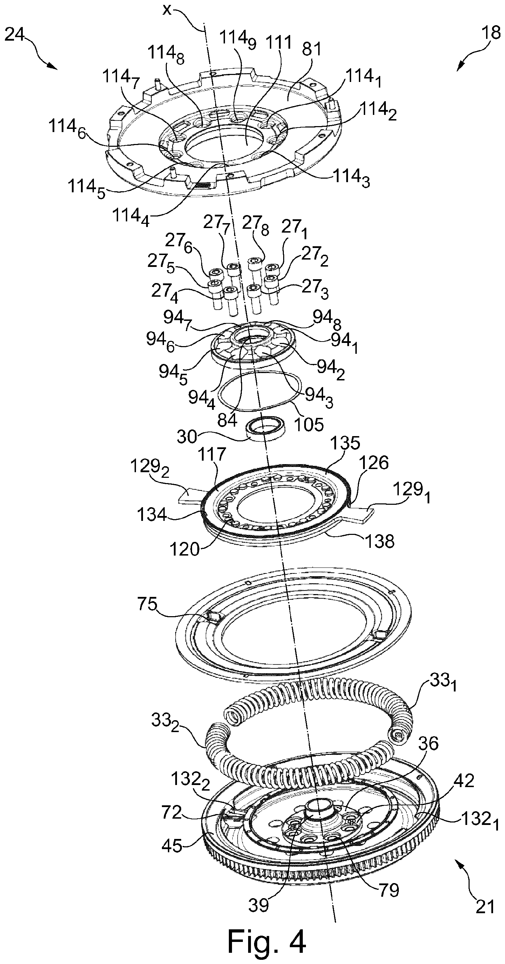

Dans le mode de réalisation illustré sur les figures 3 et 4, le moyeu secondaire comporte une première portée de moyeu secondaire 87, cylindrique de révolution, sur laquelle porte la bague extérieure 88 du roulement. De préférence, la bague de roulement est montée en force sur ladite première portée.

Ainsi, le roulement, dont la bague intérieure 53 est comme décrit précédemment portée par le moyeu primaire, assure le centrage de l'ensemble primaire sur l'ensemble secondaire.

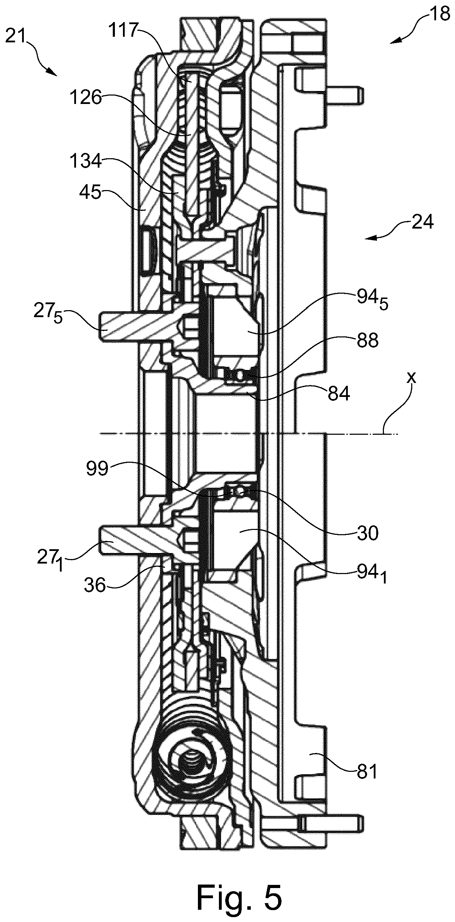

En variante, le moyeu secondaire est conformé de façon à définir un chemin de roulement 99, sur lequel les éléments de roulement du roulement peuvent rouler, comme cela est illustré sur la figure 5. Avantageusement, ce mode de réalisation permet un gain économique, en limitant le nombre de pièces à fabriquer. En outre, il autorise une réduction des tolérances de fabrication, en particulier pour assurer la coaxialité entre l'ensemble secondaire et l'ensemble primaire. Enfin, il présente une excellente fiabilité.

Par ailleurs, il comporte une deuxième portée extérieure 90, cylindrique de révolution sur laquelle s'appuie le volant secondaire. Le moyeu secondaire définit ainsi un pivot de rotation autour de l'axe X pour le volant secondaire.

Par ailleurs, il comporte une première surface d'appui de moyeu secondaire 93, de préférence définie sur une surface extérieure axiale, agencée pour être en butée axiale contre le volant secondaire.

Il comporte aussi huit fenêtres 94₁ à 94₈, réparties équi-angulairement autour de l'axe X, qui le traversent axialement dans son épaisseur, sous la forme d'alésages, par exemple cylindriques de révolution. Chaque fenêtre est conformée pour qu'il soit possible, pour au moins une position du moyeu secondaire, d'extraire un organe de fixation à travers la fenêtre. Comme cela est illustré, ces fenêtres sont disposées radialement à l'extérieur du roulement.

En outre, le moyeu secondaire comporte une deuxième portion d'appui de moyeu secondaire 95 agencée pour être en butée axiale contre la bague extérieure 88 du roulement. Il comporte aussi une troisième portion d'appui de moyeu secondaire 102 en contact axial avec une rondelle élastique 105.

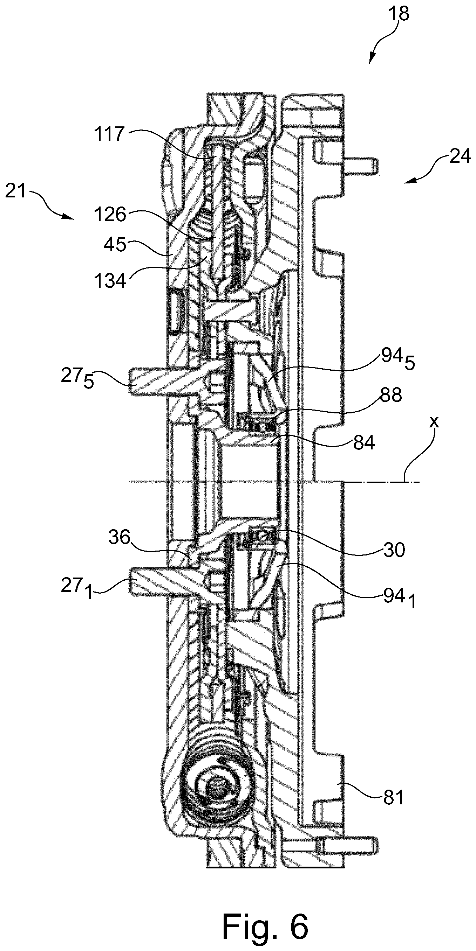

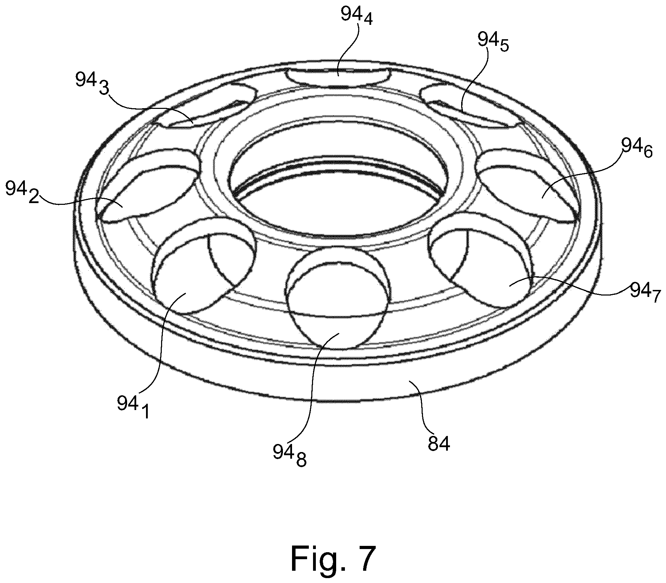

Le moyeu secondaire peut être obtenu par divers procédés de fabrication. Ainsi, le moyeu secondaire de la figure 5 est préférentiellement obtenu par frittage. En variante, le moyeu secondaire illustré sur les figures 6 et 7 est de préférence obtenu par emboutissage d'une tôle.

Le volant secondaire présente une forme générale annulaire, dont le diamètre extérieur est sensiblement égal au diamètre extérieur du volant primaire. Il comporte une première portion d'appui 108, sous la forme d'un épaulement de volant secondaire annulaire, qui définit une butée axiale du moyeu secondaire sur le volant secondaire. Dans le double volant amortisseur de la figure 3, le moyeu secondaire est ainsi logé entre l'ensemble primaire et le volant secondaire.

Le volant secondaire comporte un trou central 111, de forme cylindrique de révolution, qui se superpose axialement totalement aux fenêtres du moyeu secondaire. Le trou du volant secondaire est défini de telle sorte qu'il existe au moins une position angulaire du moyeu secondaire autour de l'axe X par rapport au volant secondaire, dans laquelle les organes de fixation peuvent être introduits vers et/ou extraits du vilebrequin à travers à la fois le moyeu secondaire et le volant secondaire.

Le volant secondaire comporte en outre neuf perçages de volant secondaire 114₁ à 114₉ le traversant dans son épaisseur, équi-angulairement répartis et situés radialement à l'extérieur du trou, permettant la fixation d'un limiteur de couple 117.

Comme illustré sur le dessin, le limiteur de couple est disposé axialement entre le volant secondaire et l'ensemble primaire, et est de préférence fixé sur le volant secondaire. Par exemple, tel qu'illustré sur la figure 4, le limiteur de couple comporte des perçages de limiteur de couple 120 qui se superposent, en vue axiale aux perçages de volant secondaire. La fixation du limiteur de couple sur le volant secondaire est assurée au moyen de rivets 123 engagés au travers des perçages de volant secondaire et des perçages de limiteur de couple.

Le limiteur de couple comporte un deuxième organe d'accouplement 126 sous la forme d'une plaquette, de forme sensiblement annulaire, et munie de deux pattes 129₁, 129₂ qui font saillie radialement à l'extérieur de la plaquette et sont diamétralement opposées. Les pattes sont logées chacune dans un espace 132₁, 132₂ situé entre les deux plus proches extrémités des deux ressorts. Ainsi, lors d'une oscillation de l'ensemble primaire par rapport à l'ensemble secondaire, une patte peut définir un deuxième point d'appui pour un ressort, de manière à assurer la mise en compression du ressort.

La plaquette est prise en sandwich dans une gorge formée dans un premier organe d'accouplement 134 sous la forme d'un étrier comportant des première 135 et deuxième 138 plaques latérales, disposées axialement de part et d'autre de la plaquette. Dans les exemples de réalisation présentés sur le dessin, la première plaque est prise en sandwich entre le volant secondaire et la deuxième plaque. L'étrier est dimensionné de telle sorte que lorsque le couple différentiel est inférieur au couple seuil d'activation du limiteur de couple, la plaquette est fixe et ne pivote pas autour de l'axe X par rapport à l'étrier. A l'inverse, lorsque le couple différentiel est supérieur au couple seuil d'activation précité, les forces de frottement entre les surfaces internes axiales 141₁, 141₂ de l'étrier et les surfaces axiales 144₁, 144₂ de la plaquette ne sont plus suffisantes pour empêcher un mouvement relatif en rotation de la plaquette par rapport à l'étrier. L'étrier et la plaquette forment ainsi des premier et deuxième organes d'accouplement du limiteur de couple respectivement et agissent comme moyens de limitation de couple, interdisant la transmission d'un couple différentiel supérieur au couple seuil d'activation précité au sein du double volant amortisseur.

Dans un mode de réalisation non représenté, le limiteur de couple peut comporter un anneau de maintien élastique, par exemple une rondelle Belleville, disposée de façon à maintenir, pour des couples différentiels inférieurs au couple seuil d'activation précité, un contact entre l'étrier et la plaquette. De cette façon, l'anneau de maintien élastique permet de compenser l'usure interne des faces de la plaquette et des faces internes de l'étrier, en maintenant lesdites plaques et l'anneau de maintien élastique en contact frottant, pour assurer ainsi un fonctionnement optimal du limiteur de couple.

L'ensemble secondaire selon l'invention comporte aussi une rondelle élastique 105, disposée axialement entre le moyeu secondaire et le limiteur de couple, plus particulièrement entre le moyeu secondaire et l'étrier. La rondelle est conformée de façon à comprimer le moyeu secondaire contre le volant secondaire, assurant ainsi le maintien axial du moyeu secondaire sur le volant secondaire. Conjointement, la mise en compression du moyeu secondaire sur le volant secondaire par l'intermédiaire de la rondelle élastique génère des efforts de frottement dans un plan axial entre le moyeu secondaire et le volant secondaire d'une part, et entre le moyeu secondaire et la rondelle élastique d'autre part.

La rondelle élastique est conformée de telle sorte qu'en usage du double volant amortisseur, c'est-à-dire lors de la transmission d'un couple moteur du vilebrequin vers la boîte de vitesses, les forces de frottement entre le moyeu secondaire et le volant secondaire sont suffisantes pour empêcher tout glissement angulaire autour de l'axe X du volant secondaire sur le moyeu secondaire.

Autrement dit, et de manière préférée, la rondelle élastique est conformée pour que le couple de repositionnement à appliquer sur le moyeu secondaire pour le faire tourner par rapport au volant secondaire soit supérieur à 2 N.m.

Par ailleurs, pour éviter tout mouvement relatif entre le moyeu secondaire et le volant secondaire, il est préférable que la rondelle élastique soit conformée de manière que le couple de repositionnement à appliquer au moyeu secondaire pour le faire tourner par rapport au volant secondaire soit supérieur à 10 N.m, par exemple compris entre 12 N.m et 15 N.m. De préférence, le couple de repositionnement à appliquer peut être transmis par une main seule sur le moyeu secondaire, sans outil.

Alternativement, dans le cas particulier où le niveau d'accélération mesuré au niveau du moyeu secondaire est élevé, en raison de forts acyclismes provenant du moteur du véhicule automobile, il est préférable que la rondelle élastique soit conformée de manière que le couple de repositionnement à appliquer au moyeu secondaire pour le faire tourner par rapport au volant secondaire soit supérieur à 100 N.m. Dans ce cas particulier, le couple de repositionnement peut être transmis par l'intermédiaire d'un tel outil annexe, par exemple une clé.

Les ensembles primaire et secondaire du double volant amortisseur sont mobiles en rotation l'un par rapport à l'autre autour de l'axe X. Ils sont liés entre eux par l'intermédiaire des ressorts hélicoïdaux périphériques, qui limitent la course angulaire autour de l'axe X de l'ensemble primaire sur l'ensemble secondaire. En usage, lors de la transmission de couple moteur du vilebrequin vers la boîte de vitesses au travers du double volant amortisseur, les ensembles primaire et secondaire peuvent osciller l'un par rapport à l'autre, sous l'action de rappel des ressorts.

Aussi longtemps qu'aucun couple différentiel n'a dépassé le couple seuil d'activation du limiteur de couple, à chaque arrêt du double volant amortisseur, la position angulaire relative de l'ensemble secondaire par rapport à l'ensemble primaire à l'arrêt reste inchangée. Par contre, comme expliqué précédemment, notamment lors des phases d'arrêt moteur, le couple différentiel peut être supérieur au couple seuil d'activation du limiteur de couple. Après la survenue d'un tel événement, ladite position angulaire relative a varié, et le moyeu secondaire peut alors être dans une position telle qu'il ne soit pas possible d'extraire les organes de fixation de l'ensemble primaire sur le vilebrequin à travers les fenêtres.

L'ouvrier chargé du démontage des organes de fixation peut alors exercer par exemple avec une clé, ou de préférence avec sa main seule, c'est-à-dire sans utilisation d'un outil, un couple de repositionnement, sensiblement orienté autour de l'axe X, sur le moyeu secondaire afin de repositionner le moyeu secondaire par rapport à l'ensemble primaire, pour permettre l'extraction des organes de fixation à travers les fenêtres du moyeu secondaire et des trous du volant primaire. Pour cela, il peut faire tourner le moyeu secondaire par rapport au volant secondaire jusqu'à ce que le trou du volant secondaire, la fenêtre du moyeu secondaire et l'alésage primaire du volant primaire soient sensiblement alignés.

Le couple de repositionnement à appliquer est alors tel que les forces générées entre le moyeu secondaire et le volant secondaire, ou entre le moyeu secondaire et la rondelle élastique respectivement, sont supérieures aux forces de frottement empêchant le glissement entre le moyeu secondaire et le volant secondaire, ou le moyeu secondaire et la rondelle élastique respectivement. L'application d'un couple de repositionnement peut aussi être réalisée au cours du montage du double volant amortisseur, par exemple lors de la fabrication d'un véhicule comportant ledit double volant amortisseur. L'ouvrier chargé du montage peut alors exercer un couple de positionnement pour faire tourner le moyeu secondaire par rapport au volant secondaire jusqu'à superposer l'alésage primaire, la fenêtre du moyeu secondaire et le trou du volant secondaire, puis ensuite insérer les organes de fixation à travers les trous du volant secondaire puis à travers les fenêtres du moyeu secondaire, et enfin à travers l'ensemble primaire pour fixer l'ensemble primaire sur le vilebrequin.

Comme cela apparaît maintenant clairement, l'invention propose donc un double volant amortisseur à limiteur de couple qui permet un démontage simplifié suite à l'activation du limiteur de couple, et qui soit plus simple et moins coûteux à fabriquer que le double volant amortisseur décrit dans DE 41 40 822.

Bien entendu, l'invention n'est pas limitée aux modes de réalisation décrits et représentés.

## Revendications

1. Ensemble secondaire (24) destiné à un double volant amortisseur à limiteur de couple (18), ledit ensemble secondaire comportant :
- un moyeu secondaire (84) d'axe X
∘ comportant une première portée de moyeu secondaire (87), apte à recevoir une bague extérieure (88) d'un roulement (30) d'axe X, ou
∘ conformé pour définir un chemin de roulement extérieur (99) d'axe X, respectivement,
ledit moyeu secondaire étant traversé sensiblement axialement par au moins une fenêtre (94) positionnée radialement à l'extérieur de ladite portée ou dudit chemin de roulement extérieur respectivement,
- un volant secondaire (81) monté à rotation autour de l'axe X sur le moyeu secondaire, et
- un limiteur de couple (117) comportant
∘ un premier organe d'accouplement (134) rigidement solidaire du volant secondaire, et
∘ un deuxième organe d'accouplement (126) accouplé au premier organe d'accouplement,
lesdits premier et deuxième organes d'accouplement n'étant découplés que sous l'effet d'un couple différentiel supérieur à un couple seuil d'activation, le volant secondaire étant traversé sensiblement axialement par un trou (111) conformé pour laisser un accès direct à ladite au moins une fenêtre, **caractérisé en ce que** le moyeu secondaire est mobile en rotation par rapport au volant secondaire sous l'action d'un couple de repositionnement inférieur au couple seuil d'activation du limiteur de couple.

2. Ensemble secondaire selon la revendication précédente, dans lequel le moyeu secondaire est mobile en rotation par rapport au volant secondaire sous l'action d'un couple de repositionnement inférieur à 300 N.m.

3. Ensemble secondaire selon l'une quelconque des revendications précédentes, dans lequel le moyeu secondaire n'est mobile en rotation par rapport au volant secondaire que sous l'action d'un couple de repositionnement supérieur à un couple seuil de repositionnement, le couple seuil de repositionnement étant supérieur à 2 N.m.

4. Ensemble secondaire selon la revendication précédente, dans lequel le deuxième organe d'accouplement du limiteur de couple est monté frottant sur le premier organe d'accouplement du limiteur de couple.

5. Ensemble secondaire selon l'une quelconque des revendications précédentes, comportant une rondelle élastique (105) d'axe X, dans lequel le moyeu secondaire comporte une troisième portion d'appui de moyeu secondaire (102) en contact axial avec la rondelle élastique.

6. Ensemble secondaire selon la revendication précédente, dans lequel la rondelle élastique est disposée entre le limiteur de couple et le moyeu secondaire.

7. Ensemble secondaire selon l'une quelconque des deux revendications immédiatement précédentes, dans lequel la rondelle élastique est comprimée axialement, de manière à plaquer le moyeu secondaire contre le volant secondaire.

8. Double volant amortisseur à limiteur de couple (18) d'axe X, comportant :
- un ensemble primaire (21) comportant un volant primaire (45) et un alésage primaire (79) apte à être traversé par un organe de fixation (27) de l'ensemble primaire sur le vilebrequin d'un moteur,
- un ensemble secondaire (24) selon l'une quelconque des revendications précédentes,
- un ressort (33),
le ressort étant interposé entre le deuxième organe d'accouplement du limiteur de couple et le volant primaire,
ladite au moins une fenêtre (94) du moyeu secondaire (84) étant conformée pour offrir un accès direct à l'alésage primaire, dans au moins une position angulaire du moyeu secondaire.

9. Double volant amortisseur selon la revendication précédente, comportant un roulement dont la bague intérieure est fixée sur l'ensemble primaire et dont la bague extérieure est
∘ fixée, sur la première portée de moyeu secondaire, ou
∘ constituée par ledit moyeu secondaire,
l'alésage primaire de l'ensemble primaire étant disposé radialement à l'extérieur du roulement.

10. Double volant amortisseur selon l'une quelconque des deux revendications immédiatement précédentes, dans lequel le nombre d'alésages primaires est égal au nombre de fenêtres.

11. Double volant amortisseur selon l'une quelconque des trois revendications immédiatement précédentes, dans lequel dans au moins une position du moyeu secondaire, chaque alésage primaire est superposé à une fenêtre qui lui fait face axialement.

12. Double volant amortisseur selon l'une quelconque des quatre revendications immédiatement précédentes, dans lequel le limiteur de couple est disposé axialement entre le volant secondaire et l'ensemble primaire.

13. Procédé de montage ou de démontage d'un double volant amortisseur à limiteur de couple selon l'une quelconque des quatre revendications précédentes, ledit procédé comportant les étapes successives suivantes :
a) entraînement en rotation du moyeu secondaire par rapport au volant secondaire de façon à superposer une fenêtre du moyeu secondaire et un alésage primaire, et
b) montage ou démontage de l'organe de fixation à travers ladite fenêtre et ledit alésage primaire, et en particulier par vissage ou dévissage dans un orifice taraudé du vilebrequin.

14. Véhicule automobile comportant un double volant amortisseur (18) selon l'une quelconque des revendications 8 à 11, des organes de fixation (27) et un vilebrequin d'un moteur, le double volant amortisseur étant fixé audit vilebrequin par l'intermédiaire des organes de fixation.

## Patentansprüche

1. Sekundärer Satz (24), der für ein Zweimassenschwungrad mit Drehmomentbegrenzer (18) bestimmt ist, wobei der sekundäre Satz aufweist:
- eine Sekundärnabe (84) mit der Achse X,
∘ die eine erste Sekundärnaben-Lagerfläche (87) aufweist, die geeignet ist, einen Außenring (88) eines Wälzlagers (30) mit der Achse X aufzunehmen, bzw.
∘ die dafür ausgebildet ist, eine äußere Laufbahn (99) mit der Achse X zu definieren,
wobei die Sekundärnabe im Wesentlichen axial von wenigstens einem Fenster (94) durchquert wird, das radial außerhalb der Lagerfläche bzw. der äußeren Laufbahn positioniert ist,
- ein Sekundärschwungrad (81), das auf der Sekundärnabe um die Achse X drehbar gelagert ist, und
- einen Drehmomentbegrenzer (117), der aufweist:
∘ ein erstes Kopplungsorgan (134), das mit dem Sekundärschwungrad starr verbunden ist, und
∘ ein zweites Kopplungsorgan (126), das mit dem ersten Kopplungsorgan gekoppelt ist,
wobei das erste und das zweite Kopplungsorgan nur unter der Wirkung eines Differenzmoments entkoppelt werden, das größer als ein Aktivierungs-Schwellenwertmoment ist,
wobei das Sekundärschwungrad im Wesentlichen axial von einem Loch (111) durchquert wird, das dafür ausgebildet ist, einen direkten Zugang zu dem wenigstens einen Fenster zu belassen,
**dadurch gekennzeichnet, dass** die Sekundärnabe unter der Wirkung eines Neupositionierungs-Drehmoments, das kleiner als das Aktivierungs-Schwellenwertmoment des Drehmomentbegrenzers ist, drehbeweglich bezüglich des Sekundärschwungrades ist.

2. Sekundärer Satz nach dem vorhergehenden Anspruch, wobei die Sekundärnabe unter der Wirkung eines Neupositionierungs-Drehmoments, das kleiner als 300 N.m ist, drehbeweglich bezüglich des Sekundärschwungrades ist.

3. Sekundärer Satz nach einem der vorhergehenden Ansprüche, wobei die Sekundärnabe nur unter der Wirkung eines Neupositionierungs-Drehmoments, das größer als ein Neupositionierungs-Schwellenwertmoment ist, drehbeweglich bezüglich des Sekundärschwungrades ist, wobei das Neupositionierungs-Schwellenwertmoment größer als 2 N.m ist.

4. Sekundärer Satz nach dem vorhergehenden Anspruch, wobei das zweite Kopplungsorgan des Drehmomentbegrenzers am ersten Kopplungsorgan des Drehmomentbegrenzers reibend angebracht ist.

5. Sekundärer Satz nach einem der vorhergehenden Ansprüche, welcher eine Federscheibe (105) mit der Achse X aufweist, wobei die Sekundärnabe einen dritten Sekundärnaben-Stützabschnitt (102) aufweist, der mit der Federscheibe in axialem Kontakt steht.

6. Sekundärer Satz nach dem vorhergehenden Anspruch, wobei die Federscheibe zwischen dem Drehmomentbegrenzer und der Sekundärnabe angeordnet ist.

7. Sekundärer Satz nach einem der zwei unmittelbar vorhergehenden Ansprüche, wobei die Federscheibe axial zusammengedrückt wird, so dass sie die Sekundärnabe gegen das Sekundärschwungrad presst.

8. Zweimassenschwungrad mit Drehmomentbegrenzer (18) mit der Achse X, welches aufweist:
- einen primären Satz (21), der ein Primärschwungrad (45) und eine primäre Bohrung (79), die von einem Organ zur Befestigung (27) des primären Satzes an der Kurbelwelle eines Motors durchquert werden kann, aufweist,
- einen sekundären Satz (24) nach einem der vorhergehenden Ansprüche,
- eine Feder (33),
wobei die Feder zwischen dem zweiten Kopplungsorgan des Drehmomentbegrenzers und dem Primärschwungrad angeordnet ist,
wobei das wenigstens eine Fenster (94) der Sekundärnabe (84) dafür ausgebildet ist, in wenigstens einer Winkelposition der Sekundärnabe einen direkten Zugang zu der primären Bohrung zu bieten.

9. Zweimassenschwungrad nach dem vorhergehenden Anspruch, welches ein Wälzlager aufweist, dessen Innenring an dem primären Satz befestigt ist und dessen Außenring
∘ an der ersten Sekundärnaben-Lagerfläche befestigt ist oder
∘ von der Sekundärnabe gebildet wird,
wobei die primäre Bohrung des primären Satzes radial außerhalb des Wälzlagers angeordnet ist.

10. Zweimassenschwungrad nach einem der zwei unmittelbar vorhergehenden Ansprüche, wobei die Anzahl primärer Bohrungen gleich der Anzahl von Fenstern ist.

11. Zweimassenschwungrad nach einem der drei unmittelbar vorhergehenden Ansprüche, wobei in wenigstens einer Position der Sekundärnabe jede primäre Bohrung einem Fenster überlagert ist, welches ihr axial gegenüberliegt.

12. Zweimassenschwungrad nach einem der vier unmittelbar vorhergehenden Ansprüche, wobei der Drehmomentbegrenzer axial zwischen dem Sekundärschwungrad und dem primären Satz angeordnet ist.

13. Verfahren zur Montage oder Demontage eines Zweimassenschwungrads mit Drehmomentbegrenzer nach einem der vier vorhergehenden Ansprüche, wobei das Verfahren die folgenden aufeinander folgenden Schritte umfasst:
a) drehendes Antreiben der Sekundärnabe in Bezug auf das Sekundärschwungrad, um ein Fester der Sekundärnabe und eine primäre Bohrung einander zu überlagern, und
b) Montage oder Demontage des Befestigungsorgans durch das Fenster und die primäre Bohrung hindurch, und insbesondere durch Verschrauben oder Abschrauben in einer Gewindebohrung der Kurbelwelle.

14. Kraftfahrzeug, welches ein Zweimassenschwungrad (18) nach einem der Ansprüche 8 bis 11, Befestigungsorgane (27) und eine Kurbelwelle eines Motors aufweist, wobei das Zweimassenschwungrad mithilfe der Befestigungsorgane an der Kurbelwelle befestigt ist.

## Claims

1. Secondary assembly (24) intended for a torque limiter dual mass flywheel (18), said secondary assembly comprising:
- a secondary hub (84) of axis X
∘ comprising a first secondary hub bearing surface (87) able to accept an outer ring (88) of a rolling bearing (30) of axis X, or
∘ shaped in such a way as to define an external raceway (99) of axis X, respectively,
the said secondary hub having passing substantially axially through it at least one opening (94) positioned radially on the outside of the said bearing surface or of the said external raceway, respectively,
- a secondary flywheel (81) mounted for rotation about the axis X on the secondary hub, and
- a torque limiter (117) comprising
∘ a first coupling member (134) rigidly attached to the secondary flywheel, and
∘ a second coupling member (126) coupled to the first coupling member,
the said first and second coupling members being uncoupled only under the effect of a differential torque in excess of an activation threshold torque, the secondary flywheel having passing substantially axially through it a hole (111) that is configured to allow direct access to the said at least one opening, **characterized in that** the secondary hub is able to move in terms of rotation with respect to the secondary flywheel under the action of a repositioning torque lower than the activation threshold torque of the torque limiter.

2. Secondary assembly according to the preceding claim, in which the secondary hub is able to move in terms of rotation with respect to the secondary flywheel under the action of a repositioning torque of below 300 N.m.

3. Secondary assembly according to either one of the preceding claims, in which the secondary hub is able to move in terms of rotation with respect to the secondary flywheel only under the action of a repositioning torque higher than a repositioning threshold torque, the repositioning threshold torque being higher than 2 N.m.

4. Secondary assembly according to the preceding claim, in which the second coupling member of the torque limiter is mounted with friction against the first coupling member of the torque limiter.

5. Secondary assembly according to any one of the preceding claims, comprising an elastic washer (105) of axis X, in which the secondary hub comprises a third secondary hub (102) bearing portion in axial contact with the elastic washer.

6. Secondary assembly according to the preceding claim, in which the elastic washer is positioned between the torque limiter and the secondary hub.

7. Secondary assembly according to either one of the two immediately preceding claims, in which the elastic washer is compressed axially, so as to press the secondary hub firmly against the secondary flywheel.

8. Torque limiter dual mass flywheel (18) of axis X, comprising:
- a primary assembly (21) comprising a primary flywheel (45) and a primary bore (79) through which a fixing member (27) for fixing the primary assembly to the crankshaft of an engine is able to pass,
- a secondary assembly (24) according to any one of the preceding claims,
- a spring (33),
the spring being interposed between the second coupling member of the torque limiter and the primary flywheel,
the said at least one opening (94) in the secondary hub (84) being configured to offer direct access to the primary bore, when the secondary hub is in at least one angular position.

9. Dual mass flywheel according to the preceding claim, comprising a rolling bearing the inner ring of which is fixed to the primary assembly and the outer ring of which is
∘ fixed, to the first secondary hub bearing surface, or
∘ made up of said secondary hub,
the primary bore of the primary assembly being positioned radially on the outside of the rolling bearing.

10. Dual mass flywheel according to either one of the two immediately preceding claims, in which the number of primary bores is equal to the number of openings.

11. Dual mass flywheel according to any one of the three immediately preceding claims, in which, when the secondary hub is in at least one position, each primary bore is superposed with an opening which faces it axially.

12. Dual mass flywheel according to any one of the four immediately preceding claims, in which the torque limiter is positioned axially between the secondary flywheel and the primary assembly.

13. Method for assembly or dismantling a torque limiter dual mass flywheel according to any one of the four preceding claims, the said method comprising the following successive steps:
a) rotating the secondary hub with respect to the secondary flywheel in order to superpose an opening of the secondary hub with a primary bore, and
b) fitting or removing the fixing member through the said opening and the said primary bore, and in particular by screwing it into or unscrewing it from a tapped orifice in the crankshaft.

14. Motor vehicle comprising a dual mass flywheel (18) according to any one of Claims 8 to 11, fixing members (27) and a crankshaft of an engine, the dual mass flywheel being fixed to the said crankshaft using the fixing members.
